# EUROPEAN PATENT SPECIFICATION

(11) **EP 4 057 810 B1**
(45) Date of publication and mention of the grant of the patent: **20.05.2026**
(21) Application number: 20825158.7
(22) Date of filing: 13.11.2020
(51) Int. Cl.: A01K 91/18, A01K 79/02

(54) **SHARK DETERRENT DEVICE AND METHOD**
ABSCHRECKVORRICHTUNG UND -VERFAHREN FÜR HAIE
DISPOSITIF ET PROCÉDÉ DISSUASIFS POUR REQUINS

(30) Priority: 13.11.2019 GB 201916517
(43) Date of publication of application: 21.09.2022
(73) Proprietor: Fishtek Marine Ltd, Totnes, Devon TQ9 6JY (GB)
(72) Inventor: KIBEL, Ben, Dartington Totnes, Devon TQ7 6JY (GB); KIBEL, Pete, Dartington Totnes, Devon TQ9 6JY (GB); THOMAS, Dave, Newton Abbot, Devon TQ13 8SD (GB)
(74) Representative: Handsome I.P. Ltd
(86) International application number: PCT/GB2020/052888
(87) International publication number: WO 2021/094764

(56) References cited:
- WO-A2-2012/135394
- JP-B2- 6 582 307

## Description

The present invention relates generally to a device for deterring sharks and a method of deterring sharks and finds particular, although not exclusive, utility in long line fishing.

Sharks and other sea creatures, including fish such as rays, are known to depredate (i.e. steal) fish from nets and longlines during the human act of fishing (e.g. for tuna or swordfish).

Sharks and some other marine species have electroreceptor organs for detecting electric stimuli. In sharks the electroreceptor organs are known as the ampullae of Lorenzini, which are used to detect electromagnetic fields that all living things produce. This helps sharks find prey.

It is known to try to use electrical currents passed through seawater to deter sharks from regions of human activity, particularly around divers. However, as the electrical field around a dipole decreases at least as fast as the inverse of the cube of the distance from the dipole (rather than the inverse of the square of the distance), it is conventionally considered necessary to have a constant electrical current, or very closely spaced pulses in order to effectively deter sharks from approaching between pulses.

As can be appreciated, a higher electrical current will have a larger range and is therefore desirable. Accordingly, the power consumption required by such deterrents is very high, and is prohibitive in small portable devices.

WO2012135394A2 discloses a shark deterrent device for attachment to a user's body, the device including a waterproof housing, a power source and electrodes opposite each end of the housing. JP6582307B2 discloses a deterrent device comprising a ring-electrode arranged to generate electrical pulses.

According to a first aspect of the present invention, there is provided a device for reducing depredation of fish by sharks, the device comprising: a waterproof housing; a power source within the housing; a first electrode; a second electrode; and a controller powered by the power source and configured to supply a sequence of electrical pulses between the first electrode and the second electrode, each electrical pulse in the sequence of electrical pulses spaced from each adjacent pulse by at least 3 seconds; characterised in that the first electrode is disposed on an exterior of the housing at a first end of the housing, and the second electrode is disposed on the exterior of the housing at a second end of the housing opposite the first end of the housing.

In this way, the inventor found that an effective deterrent from depredation may be created with a much lower energy consumption than previously considered possible.

Each electrical pulse in the sequence of electrical pulses may be spaced from each adjacent pulse by at least 4s, 5s, 6s, 8.5s and/or 12s.

Each electrical pulse in the sequence of electrical pulses may be spaced from each adjacent pulse by at most 3s, 4s, 5s, 6s, 8.5s and/or 12s.

Each electrical pulse may have a voltage between 1V and 50V, in particular between 10V and 45V, more particularly between 20V and 40V, for example approximately 20V, 25V, 30V and/or 40V.

Each electrical pulse may have a duration of between 1ms and 10ms, in particular between 1.5ms and 5ms, for example approximately 1.5ms, 3ms and/or 5ms.

The second electrode may be spaced from the first electrode by between 5cm and 30cm, in particular between 8cm and 20cm, more particularly between 10cm and 15cm, for example approximately 12cm.

The housing may be waterproof to a depth of at least 1m, 5m, l0m, 100m, 500m, 1000m and/or 3000m.

The power source may comprise at least one battery, for instance only one, two, three, four or more batteries. The batteries may be for instance AA, AAA, C or D batteries, or any other suitable form of batteries.

The device may be further configured to activate upon submersion in water.

The device may further comprise a pair of water contact pins in electrical communication with the controller and arranged to project out of the housing such that water present between the projecting ends of the pins completes an electrical circuit causing device to activate. Water between the projecting ends of the pins may mean salt water and/or sea water, and optionally may not include freshwater.

The water contact pins may project out of the housing by less than 5mm, 4mm, 3mm, 2mm and/or 1mm.

The respective electrodes may comprise the water contact pins. That is, the first and second electrodes may be dual purpose, for water detection and pulse emission/reception.

The water contact pins and/or electrodes may extend through the housing by virtue of an interference fit to prevent water ingress. For instance, at least 5N of force may be required to located them within respective holes in the housing (or portions of the holes), in particular at least 20N, more particularly at least 30N, 50N or 70N; alternatively and/or additionally, the pins may be glued or otherwise sealed within the respective holes (e.g. by rubber tubing or with O-rings).

The first and second electrodes may comprise plates, e.g. flat plates, to maximise electrical conduction through water.

According to a second aspect of the present invention, there is provided a method of reducing depredation of fish by sharks, the method comprising: providing the device according to any of claims 1-7; supplying a sequence of electrical pulses between the first electrode and the second electrode, each electrical pulse in the sequence of electrical pulses spaced from each adjacent pulse by at least 3 seconds.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.
Figure 1 is a perspective view of a first part of a device for deterring sharks.
Figure 2 is a perspective view of a second part of the device of figure 1.
Figure 3 is a flow diagram of the functional states of a device for deterring sharks.
Figure 4 is a block diagram of the operational components of a device for deterring sharks.
Figure 5 is a wiring diagram of the operational components of a device for deterring sharks.

The present invention will be described with respect to certain drawings but the invention is not limited thereto but only by the claims. The drawings described are only schematic and are non-limiting. Each drawing may not include all of the features of the invention and therefore should not necessarily be considered to be an embodiment of the invention. In the drawings, the size of some of the elements may be exaggerated and not drawn to scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that operation is capable in other sequences than described or illustrated herein. Likewise, method steps described or claimed in a particular sequence may be understood to operate in a different sequence.

Moreover, the terms top, bottom, over, under and the like in the description and the claims are used for descriptive purposes and not necessarily for describing relative positions. It is to be understood that the terms so used are interchangeable under appropriate circumstances and that operation is capable in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "connected", used in the description, should not be interpreted as being restricted to direct connections only. Thus, the scope of the expression "a device A connected to a device B" should not be limited to devices or systems wherein an output of device A is directly connected to an input of device B. It means that there exists a path between an output of A and an input of B which may be a path including other devices or means. "Connected" may mean that two or more elements are either in direct physical or electrical contact, or that two or more elements are not in direct contact with each other but yet still co-operate or interact with each other. For instance, wireless connectivity is contemplated.

Reference throughout this specification to "an embodiment" or "an aspect" means that a particular feature, structure or characteristic described in connection with the embodiment or aspect is included in at least one embodiment or aspect of the present invention. Thus, appearances of the phrases "in one embodiment", "in an embodiment", or "in an aspect" in various places throughout this specification are not necessarily all referring to the same embodiment or aspect, but may refer to different embodiments or aspects. Furthermore, the particular features, structures or characteristics of any one embodiment or aspect of the invention may be combined in any suitable manner with any other particular feature, structure or characteristic of another embodiment or aspect of the invention, as would be apparent to one of ordinary skill in the art from this disclosure, in one or more embodiments or aspects.

Similarly, it should be appreciated that in the description various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Moreover, the description of any individual drawing or aspect should not necessarily be considered to be an embodiment of the invention. Rather, as the following claims reflect, inventive aspects lie in fewer than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some features included in other embodiments, combinations of features of different embodiments are meant to be within the scope of the invention, and form yet further embodiments, as will be understood by those skilled in the art. For example, in the following claims, any of the claimed embodiments can be used in any combination.

In the description provided herein, numerous specific details are set forth. However, it is understood that embodiments of the invention may be practised without these specific details. In other instances, well-known methods, structures and techniques have not been shown in detail in order not to obscure an understanding of this description.

In the discussion of the invention, unless stated to the contrary, the disclosure of alternative values for the upper or lower limit of the permitted range of a parameter, coupled with an indication that one of said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

The use of the term "at least one" may mean only one in certain circumstances. The use of the term "any" may mean "all" and/or "each" in certain circumstances.

The principles of the invention will now be described by a detailed description of at least one drawing relating to exemplary features. It is clear that other arrangements can be configured according to the knowledge of persons skilled in the art without departing from the underlying concept or technical teaching, the invention being limited only by the terms of the appended claims.

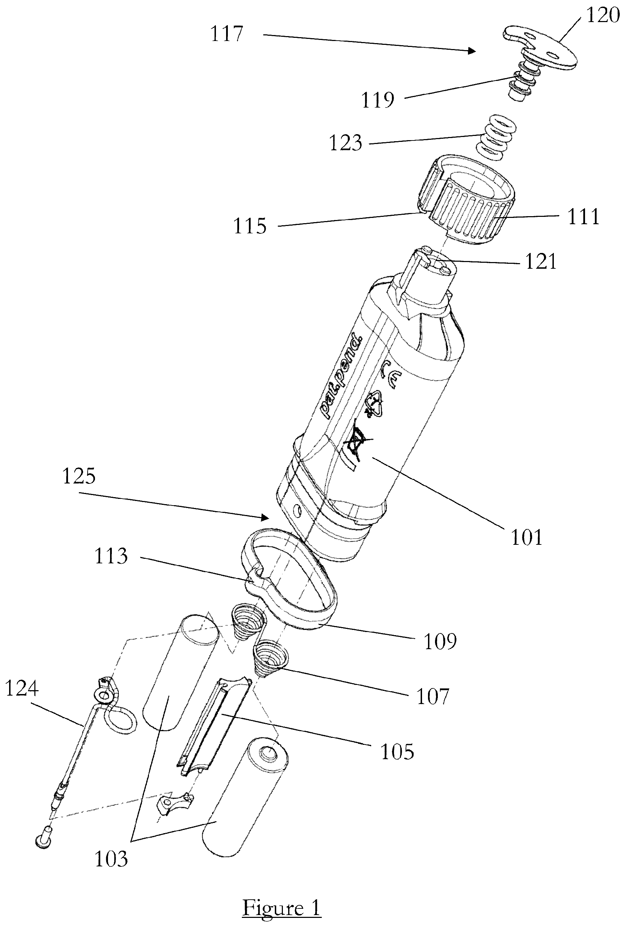

Figure 1 is a perspective exploded view of a first part of a device for deterring sharks comprising a first body portion 101, inside which are held two AA batteries 103, held apart by a divider 105 which also acts to provide structural rigidity to the first body portion 101 (to prevent collapse thereof under pressure). The negative terminal of one of the batteries 103 is connected to the positive terminal of the other one of the batteries 103 by coiled spring conductor 107.

Axially disposed on the first body portion 101 are a first line connector 109 and a second line connector 111, each having a respective hole 113, 115 through which a fishing line may be connected such that the device lies against the fishing line and aligned therewith.

A first electrode 117, comprising an external plate portion 120 and an internal shaft portion 119 is received within a through-hole 121 in the first body portion 101.

Water ingress through the through-hole 121 is prevented by a series of O-rings 123 around the shaft portion 119. An electrical wire 124 connects between the first electrode 117, through the interior of the first body portion 101 to an opposing end of the first body portion where an opening 125 into the first body portion is found.

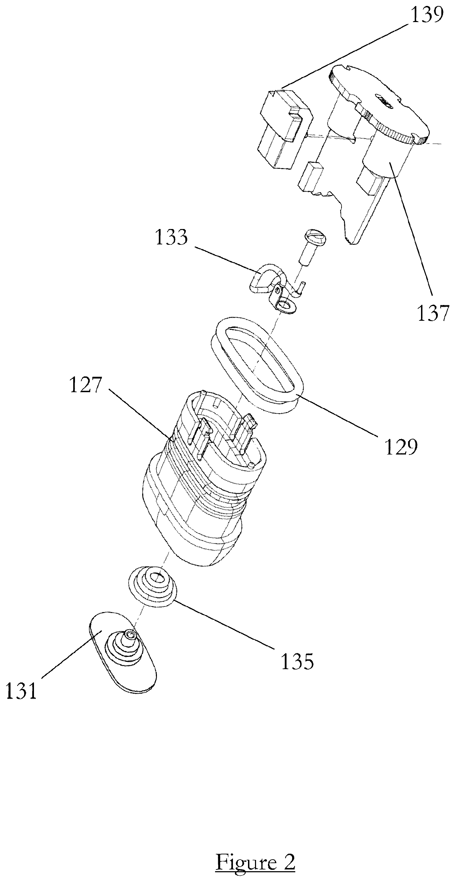

Figure 2 is a perspective exploded view of a second part of the device of figure 1 for sealing the opening 125, comprising a second body portion 127, or cap, insertable into the opening 125, around which a pair of O-rings 129 are provided. A second electrode 131 is provided at one end of the second body portion 127, comprising a plate with a protrusion that extends through the cap 127 to a further electrical wire 133. Water ingress from around the second electrode 131 is prevented by a series of O-rings 135.

The further electrical wire 133 connects the second electrode 131 to a controller / circuit board element 137 that, when sealing the opening 125 is electrically connected to the batteries 103 and electrical wire 124. The element 137 is reinforced either side within the cap by blocks 139 that prevent collapse of the cap under pressure.

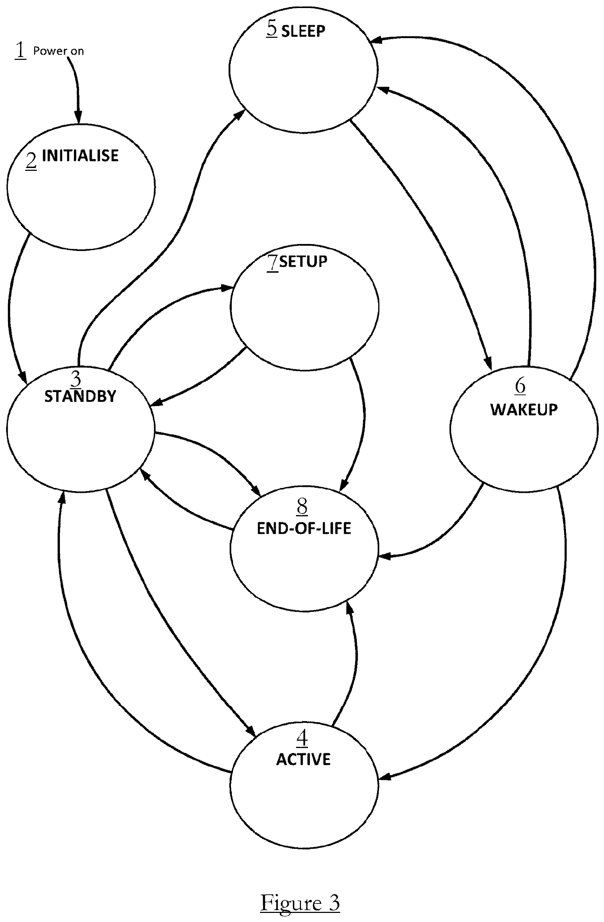

Figure 3 is a flow diagram of the functional states of a device for deterring sharks.

At 1, the device is powered on (e.g. the batteries are inserted), and immediately enters the Initialise state 2. This is a high power (16MHz clock), short duration state. The Initialise state 2 involves the initialisation of the various registers in the microcontroller and a rapid LED flash sequence to indicate that the unit is operational.

After initialisation, the device immediately enters the Standby state 3, which is a predominantly low power state (31kHz clock). Periodically the device tests for water, a control signal (such as an Infra-Red signal), and the battery state.

If water is detected, the unit enters the Active state 4, which is a high power state (16MHz clock) where the unit repeatedly generates voltage pulses into the water. It also periodically tests the battery condition and for the continued presence of water. If no water is detected, the unit returns to the Standby state 3.

In Standby state 3, if no water is detected, no control signal is detected and the battery state is deemed to be OK, over a time period of 'x' minutes, the device will enter the Sleep state 5, in which power is conserved by operating only a watchdog timer. When the watchdog timer timeouts (at approximately multiple minute intervals that can be set by a user), the unit enters the Wakeup state 6, in which the device test for water and test the battery. Optionally, the Wakeup state 6 may permit testing for a control signal, but this is not shown in the figure.

The Wakeup state 6 is a high power state (16MHz clock) where preferably the unit tests the state of the battery first and only if OK will it test for water. If water is detected the device enters the Active state 4.

If a control signal is detected, for instance in the Standby state 3 (or optionally the Wakeup state 6) the device enters the Setup state 7.

The Setup state 7 is a high power state (16MHz clock) where incoming control signals are received and decoded. The various parameters in memory are then set according to the signals received.

For example:-
Mode 1 corresponds to 40V pulses of 1.5ms separated by 4s.
Mode 2 corresponds to 40V pulses of 1.5ms separated by 12s.
Mode 3 corresponds to 40V pulses of 5ms separated by 12s.
Mode 4 corresponds to 40V pulses of 5ms separated by 5s.
Mode 5 corresponds to 30V pulses of 1.5ms separated by 6s.
Mode 6 corresponds to 25V pulses of 1.5ms separated by 12s.
Mode 7 corresponds to 40V pulses of 3ms separated by 12s.
Mode 8 corresponds to 40V pulses of 3ms separated by 8.5s.
Mode 9 corresponds to 20V pulses of 3ms separated by 12s.

If after 10 seconds no control signal is detected in the Setup state 7, the device transitions back to the Standby state 3.

From any state, if an end-of-life battery condition is detected, then the device enters the End-of-life state 8. This is a high power state (16MHz clock) which usually lasts indefinitely. The most usual way to escape from this state is to replace the batteries. A battery condition test is periodically carried out and if the battery is found to be OK then the unit enters the Standby state. This provides a means of recovery if the unit has entered the End-of life state due to a momentary battery disconnection occurring (for example if the unit is dropped on its end, compressing the battery contact springs) exactly at the point when a battery condition test was in progress.

The voltage and current thresholds used by the firmware to detect the various conditions are as follows:-
Low battery voltage: Battery voltage < 2.40V
End-of-life battery voltage: Battery voltage < 2.15V
Not end-of-life battery voltage: Battery voltage > 2.40V
Water detected: Output current > 625mA
Water not detected: Output current < 625mA
Short-circuit output: Output current > 14.375A

Note that in all cases when generating output pulses (either shark-deterrent pulses or water presence testing pulses), the hardware of the microcontroller will detect an overcurrent (e.g. short circuit) condition and will immediately truncate the pulse without firmware intervention to avoid damaging the device. The firmware is able to determine whether this has occurred after each pulse. Hence in Active mode 4, no specific action is taken by the state machine if a short-circuit condition occurs, but hardware intervention will occur on a pulse-by-pulse basis.

The length of time elapsing before the transition to the Sleep state 5 from the Standby state 3 depends upon the state immediately before the Standby state. These times are:-
From Initialise state 2: 15 minutes.
From Active state 4: 2 hours.
From Setup state 7: 15 minutes.
From End-of-life state 8: 15 minutes.

If a low battery voltage is detected (indicative of approximately 8 hours of active operation remaining), an LED indication is generated but no state change results.

Standby is the only state when the infrared detector is powered on and its current consumption is relatively high. Hence the duration of the Standby state is minimised to conserve battery life. At several (infrequent) points during operation in Standby state, operation reverts to high power (16MHz clock) for functional reasons.

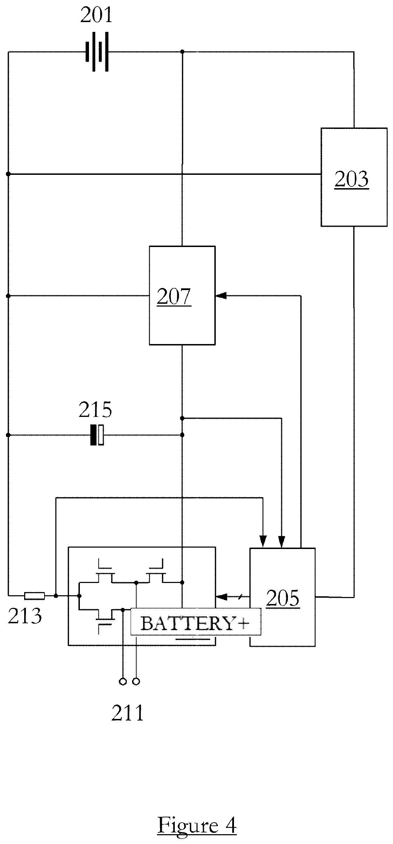

Figure 4 is a block diagram of the operational components of a device for deterring sharks. A battery 201 provides power to a voltage regulator 203, which outputs a constant 2V to a microcontroller 205. The microcontroller 205 controls a voltage boost circuit 207 that can output a maximum of 40V to a transistor H-bridge 209 that drives the output electrodes 211. The microcontroller 205 monitors the voltage feedback produced by the voltage boost circuit 207, and monitors the current feedback via a current sense resistor 213 connected in series with the transistor H-bridge 209. A charge storage capacitor 215 is also provided in parallel with the transistor H-bridge 209.

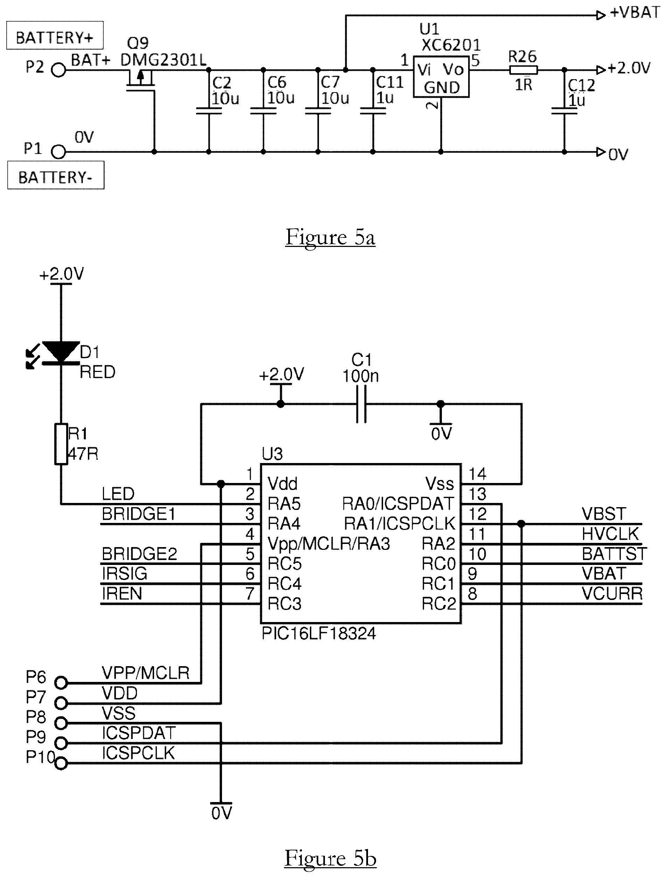

Figure 5a to 5e show more detail of the operational components of a device for deterring sharks. In figure 5a, inputs from the battery P1 and P2, are passed to a voltage regulator U1 to provide three outputs: the battery voltage + VBAT, a constant +2V signal and a ground signal 0V. It is to be appreciated that the voltage values provided are for example only, and different values may be chosen, for instance if the +VBAT voltage is less than or equal to 2V, the voltage regulator would only be able to output a constant voltage signal of a lower value than that shown.

Figure 5b shows an input from the +2V line, and five further control inputs P6, P7, P8, P8 and P10 being passed to a microcontroller U3 with fourteen output pins.

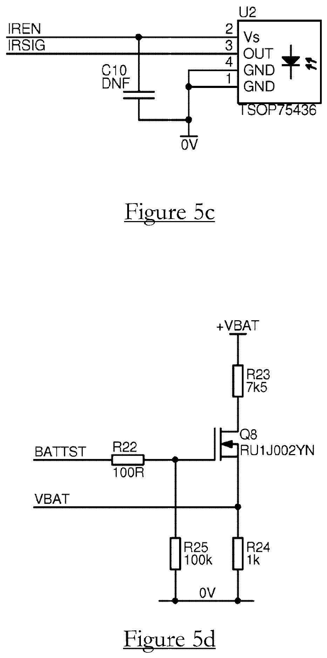

Figure 5c shows connection of IRSIG and IREN of pins 6 and 7 of the microcontroller U3 with an infra-red receiver module U2 such that the microcontroller U3 may be controlled via infra-red signals.

Figure 5d shows connection of BATTST and VBAT of pins 10 and 9 of the microcontroller U3 with the +VBAT battery voltage from figure 5b in order to monitor the status of the battery.

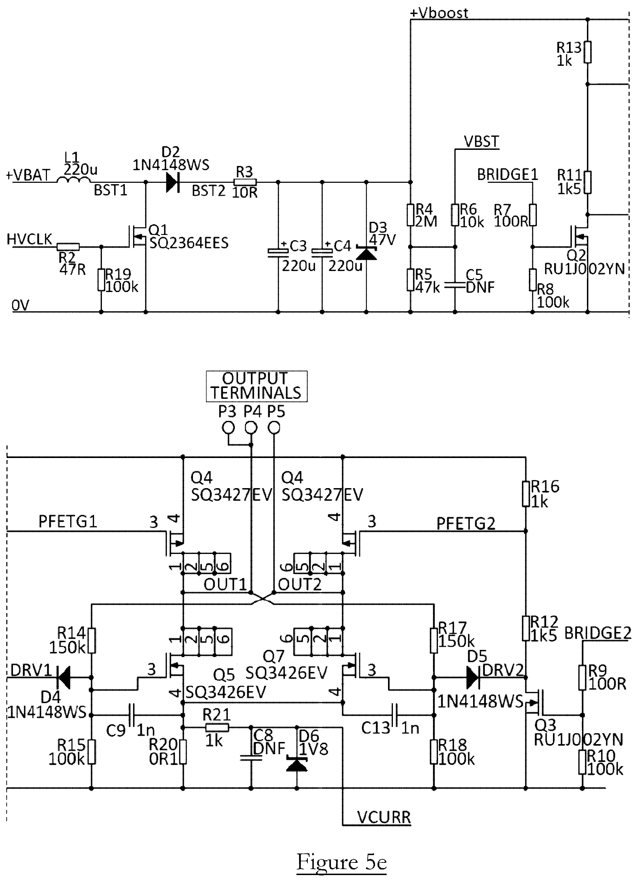

Figure 5e shows connection of the BRIDGE1 and BRIDGE2 control signals of pins 3 and 5 of the microcontroller to the transistor H-bridge and thereby to output terminals P3, P4 and P5. The circuit shown is powered by +VBAT from figure 5a, via figure 5d. Connection of the circuit with VCURR, HVCLK and VBST of pins 8, 11 and 12 of the microcontroller U3 are also shown.

## Claims

1. A device for reducing depredation of fish by sharks, the device comprising:
a waterproof housing;
a power source (103) within the housing;
a first electrode (117);
a second electrode (131); and
a controller (137) powered by the power source and configured to supply a sequence of electrical pulses between the first electrode and the second electrode each electrical pulse in the sequence of electrical pulses spaced from each adjacent pulse by at least 3 seconds;
**characterised in that** the first electrode is disposed on an exterior of the housing at a first end of the housing, and the second electrode is disposed on the exterior of the housing at a second end of the housing opposite the first end of the housing.

2. The device for reducing depredation of fish by sharks of claim 1, wherein each electrical pulse in the sequence of electrical pulses is spaced from each adjacent pulse by at least 12s.

3. The device for reducing depredation of fish by sharks of claim 1 or claim 2, wherein each electrical pulse has a voltage between 20V and 40V.

4. The device for reducing depredation of fish by sharks of any preceding claim, wherein each electrical pulse has a duration of between 1.5ms and 5ms.

5. The device for reducing depredation of fish by sharks of any preceding claim, wherein the second electrode (131) is spaced from the first electrode (117) by between 8cm and 20cm.

6. The device for reducing depredation of fish by sharks of any preceding claim, further comprising a pair of water contact pins in electrical communication with the controller (137) and arranged to project out of the housing such that water present between the projecting ends of the pins completes an electrical circuit causing device to activate.

7. The device for reducing depredation of fish by sharks of claim 6, wherein the first (117) and second (131) electrodes comprise the water contact pins.

8. A method of reducing depredation of fish by sharks, the method comprising:
providing the device according to any preceding claim;
supplying a sequence of electrical pulses between the first electrode (117) and the second electrode (131), each electrical pulse in the sequence of electrical pulses spaced from each adjacent pulse by at least 3 seconds.

## Patentansprüche

1. Eine Vorrichtung zur Reduzierung des Fischraubs durch Haie, die Vorrichtung umfassend:
ein wasserdichtes Gehäuse;
eine Stromquelle (103) innerhalb des Gehäuses;
eine erste Elektrode (117);
eine zweite Elektrode (131); und
einen Kontroller (137), der von der Stromquelle gespeist wird und dazu konfiguriert ist, eine Sequenz von elektrischen Impulsen zwischen der ersten Elektrode und der zweiten Elektrode zu liefern, wobei jeder elektrische Impuls in der Sequenz von elektrischen Impulsen von jedem benachbarten Impuls um mindestens 3 Sekunden beabstandet ist;
**dadurch gekennzeichnet, dass**
die erste Elektrode an einer Außenseite des Gehäuses an einem ersten Ende des Gehäuses angeordnet ist, und die zweite Elektrode an der Außenseite des Gehäuses an einem zweiten Ende des Gehäuses gegenüber dem ersten Ende des Gehäuses angeordnet ist.

2. Die Vorrichtung zur Reduzierung des Fischraubs durch Haie nach Anspruch 1, wobei jeder elektrische Impuls in der Sequenz von elektrischen Impulsen von jedem benachbarten Impuls um mindestens 12 s beabstandet ist.

3. Die Vorrichtung zur Reduzierung des Fischraubs durch Haie nach Anspruch 1 oder Anspruch 2, wobei jeder elektrische Impuls eine Spannung zwischen 20 V und 40 V aufweist.

4. Die Vorrichtung zur Reduzierung des Fischraubs durch Haie nach einem der vorhergehenden Ansprüche, wobei jeder elektrische Impuls eine Dauer zwischen 1,5 ms und 5 ms aufweist.

5. Die Vorrichtung zur Reduzierung des Fischraubs durch Haie nach einem der vorhergehenden Ansprüche, wobei die zweite Elektrode (131) von der ersten Elektrode (117) um einen Abstand zwischen 8 cm und 20 cm beabstandet ist.

6. Die Vorrichtung zur Reduzierung des Fischraubs durch Haie nach einem der vorhergehenden Ansprüche, ferner umfassend ein Paar Wasserkontaktstifte in elektrischer Verbindung mit dem Kontroller (137) und so angeordnet, dass sie aus dem Gehäuse herausragen, so dass zwischen den herausragenden Enden der Stifte vorhandenes Wasser einen elektrischen Stromkreis schließt, der bewirkt, dass die Vorrichtung aktiviert wird.

7. Die Vorrichtung zur Reduzierung des Fischraubs durch Haie nach Anspruch 6, wobei die erste (117) und die zweite (131) Elektrode die Wasserkontaktstifte umfassen.

8. Ein Verfahren zur Reduzierung des Fischraubs durch Haie, wobei das Verfahren umfasst:
Bereitstellen der Vorrichtung nach einem der vorhergehenden Ansprüche;
Liefern einer Sequenz von elektrischen Impulsen zwischen der ersten Elektrode (117) und der zweiten Elektrode (131), wobei jeder elektrische Impuls in der Sequenz von elektrischen Impulsen von jedem benachbarten Impuls um mindestens 3 Sekunden beabstandet ist.

## Revendications

1. - Dispositif pour réduire la déprédation de poissons par les requins, le dispositif comprenant :
un boîtier étanche ;
une source d'énergie (103) à l'intérieur du boîtier ;
une première électrode (117) ;
une seconde électrode (131) ; et
un dispositif de commande (137) alimenté par la source d'énergie et configuré pour fournir une séquence d'impulsions électriques entre la première électrode et la seconde électrode, chaque impulsion électrique dans la séquence d'impulsions électriques étant espacée de chaque impulsion adjacente d'au moins 3 secondes ;
**caractérisé par le fait que** la première électrode est disposée sur un extérieur du boîtier à une première extrémité du boîtier et que la seconde électrode est disposée sur l'extérieur du boîtier à une seconde extrémité du boîtier opposée à la première extrémité du boîtier.

2. - Dispositif de réduction de la déprédation de poissons par les requins, selon la revendication 1, dans lequel chaque impulsion électrique dans la séquence d'impulsions électriques est espacée de chaque impulsion adjacente d'au moins 12s.

3. - Dispositif de réduction de la déprédation de poissons par les requins, selon la revendication 1 ou la revendication 2, dans lequel chaque impulsion électrique a une tension entre 20V et 40V.

4. - Dispositif de réduction de la déprédation de poissons par les requins, selon l'une quelconque des revendications précédentes, dans lequel chaque impulsion électrique a une durée d'entre 1,5ms et 5ms.

5. - Dispositif de réduction de la déprédation de poissons par les requins, selon l'une quelconque des revendications précédentes, dans lequel la seconde électrode (131) est espacée de la première électrode (117) d'entre 8cm et 20cm.

6. - Dispositif de réduction de la déprédation de poissons par les requins, selon l'une quelconque des revendications précédentes, comprenant en outre une paire de broches de contact avec l'eau en communication électrique avec le dispositif de commande (137) et disposées pour faire saillie hors du boîtier de telle sorte que de l'eau présente entre les extrémités saillantes des broches complète un circuit électrique amenant le dispositif à s'activer.

7. - Dispositif de réduction de la déprédation de poissons par les requins, selon la revendication 6, dans lequel les première (117) et seconde (131) électrodes comprennent les broches de contact avec l'eau.

8. - Procédé de réduction de la déprédation de poissons par les requins, le procédé comprenant :
se procurer le dispositif selon l'une quelconque des revendications précédentes ;
fournir une séquence d'impulsions électriques entre la première électrode (117) et la seconde électrode (131), chaque impulsion électrique dans la séquence d'impulsions électriques étant espacée de chaque impulsion adjacente d'au moins 3 secondes.
